# FASCICULE DE BREVET EUROPEEN

(11) **EP 0 469 939 B1**
(45) Date de publication et mention de la délivrance du brevet: **04.01.1995**
(21) Numéro de dépôt: 91401808.0
(22) Date de dépôt: 02.07.1991
(51) Int. Cl.: F16B 21/04, B64G 1/64

(54) **Dispositif de liaison entre deux objets par plusieurs points de fixation**
Vorrichtung zum Verbinden zweier Gegenstände mit mehreren Befestigungspunkten
Device for connecting two articles with several attachment points

(30) Priorité: 04.07.1990 FR 9008470
(43) Date de publication de la demande: 05.02.1992
(73) Titulaire: AEROSPATIALE Société Nationale Industrielle, 75781 Paris Cédex 16 (FR)
(72) Inventeur: Balemboy, Christophe, F-33700 Merignac (FR); Pavec, Jean-Luc, F-33460 Margaux (FR); Girol, Jean-Claude, F-33200 Bordeaux (FR)
(74) Mandataire: Ilgart, Jean-Christophe

(56) Documents cités:
- DE-A- 2 354 679
- DE-B- 2 927 273
- FR-A- 2 516 893

## Description

L'invention se rapporte à un dispositif de liaison entre un premier et un second objets par plusieurs points de fixation.

Le brevet français 2 516 893 décrit un dispositif présentant certaines ressemblances avec l'invention : chaque point de fixation comprend une pince fixée sur un des objets et qui peut enserrer une patte appartenant à l'autre objet. Les pinces sont constituées de façon qu'une gâchette en forme de levier articulé les maintienne à une position de serrage des pattes. Les gâchettes peuvent toutefois être retirées sous l'action d'un système de déclenchement qui comprend en particulier un élément de commande et des câbles tendus et passant par l'extrémité des leviers. Quand l'élément de commande est utilisé, les câbles sont relâchés de celui-ci et reviennent à l'état libre, ce qui fait basculer les gâchettes. Rien ne s'oppose alors à l'ouverture des pinces et au dégagement du second objet.

Ce système est intéressant surtout pour relâcher simultanément plusieurs points de fixation. Quand le second objet doit être fixé, il est nécessaire de pouvoir accéder à chacun des points de fixation pour engager la patte dans la pince correspondante.

L'invention a par contre pour objet un dispositif de liaison dans lequel l'action manuelle est réduite à un minimum et où une liaison stable peut être obtenue rapidement et sans obliger à vérifier chaque point de fixation ni même à y accéder.

Chaque point de fixation comprend un dispositif à baïonnette. Un dispositif à baïonnette comprend deux parties cylindriques qui peuvent être emboîtées l'une dans l'autre, dont l'une comprend au moins un tenon et l'autre au moins une rainure incurvée ou formant un angle dans laquelle coulisse un tenon respectif. L'emboîtement comprend un mouvement d'enfoncement des deux parties l'une dans l'autre suivi d'une rotation relative qui les verrouille ensemble.

On emploie classiquement une baïonnette unique pour lier deux objets entre eux, et chacune des parties de la baïonnette est rigidement fixée à l'un des objets, ce qui implique que les objets subissent une rotation relative au moment de leur fixation. Il n'en va pas de même dans l'invention. Chaque point de fixation comprend une partie de baïonnette rotative ainsi qu'un système de verrouillage en rotation de la partie de baïonnette rotative sur le premier objet, et une partie de baïonnette fixe ainsi qu'un système de libération conçu de façon à interrompre l'effet du système de verrouillage sur le second objet. En outre, les parties de baïonnettes rotatives sont reliées entre elles par des bielles et il existe un système de serrage constitué de coins sur le premier objet et au moins une des parties de baïonnettes rotatives ; ce système de serrage existe avantageusement à chaque point de fixation.

Suivant une disposition préférée, les parties de baïonnettes rotatives sont composées de deux couronnes mutuellement libres en rotation quoiqu'unies par un système d'encliquetage libérable dans une direction de serrage des coins. Une des couronnes est conçue pour s'emboîter avec une partie de baïonnette fixe et l'autre porte un des coins du système de serrage. Cette disposition permet de décomposer le processus de liaison en une phase d'emboîtement des parties de baïonnettes dans laquelle les deux couronnes tournent de conserve et une phase de serrage dans laquelle seule la couronne portant un des coins reste mobile. Surtout dans ce cas, il est avantageux qu'un ressort soit disposé entre une des bielles et le premier objet de manière à déplacer les parties de baïonnettes rotatives d'une position où le système de verrouillage agit vers une position où les coins sont serrés.

Une plus grande sécurité est offerte si une des parties de baïonnettes rotatives est munie d'une poignée à ergot repoussée par un ressort comprimé entre celle-ci et la partie de baïonnette rotative. Le premier objet est alors pourvu d'une rampe sur laquelle l'ergot est plaqué et qui présente un creux où l'ergot peut pénétrer sous l'action du ressort à la position de serrage des coins. La poignée peut alors comprendre une partie de préhension détachable de l'ergot à cette position.

On va maintenant décrire une réalisation favorite de l'invention plus en détail à l'aide des figures suivantes annexées à titre illustratif et non limitatif :
- la figure 1 est une vue d'ensemble de face du premier objet et des pièces du dispositif qui en dépendent ;
- la figure 2 est une vue suivant la coupe II-II de la figure 1 représentant également le second objet et les pièces du dispositif qui en dépendent ;
- les figures 3A à 3D sont des vues d'états successifs du système de serrage à coins suivant la coupe III-III de la figure 2 ;
- la figure 4 est une vue en coupe de la poignée à ergot ;
- la figure 5 est une vue suivant la coupe V-V de la figure 4 : et
- la figure 6 représente la partie de préhension de la poignée détachée de la partie de baïonnette rotative.

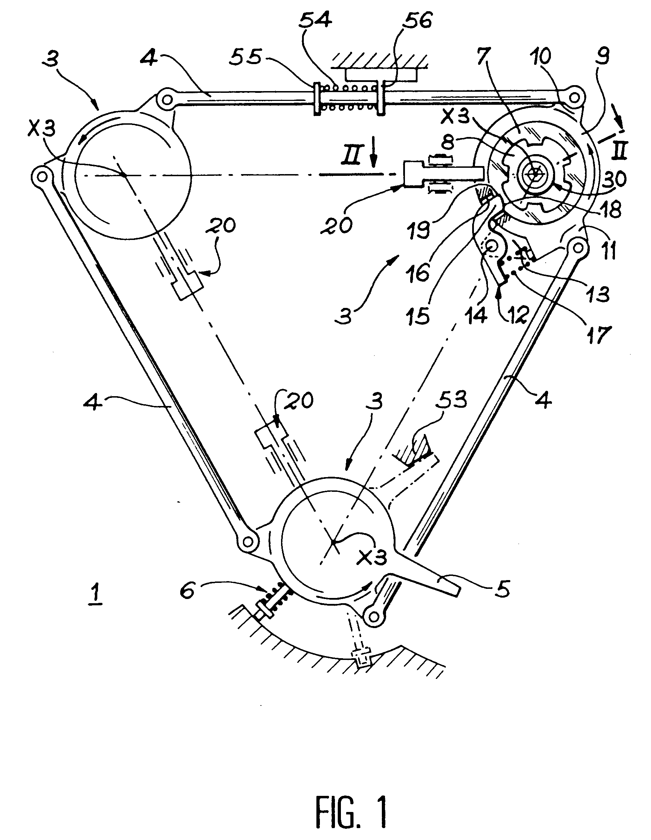

L'invention peut être utilisée pour relier deux objets 1 et 2 tels que des portions de véhicules aéronautiques et spatiaux, et aussi bien en apesanteur ou sous l'eau que dans l'air. On distingue sur la figure 1 le premier objet 1 porteur de trois parties de baïonnettes rotatives 3 disposées suivant un triangle équilatéral pour lier les objets 1 et 2 par trois points de fixation. Les parties de baïonnettes rotatives 3 tournent autour d'axes X3 parallèles entre eux et perpendiculaires à la face plane du premier objet 1 sur laquelle se dressent les parties de baïonnettes rotatives 3. Trois bielles 4 relient les parti es de baïonnettes rotatives 3 deux à deux et définissent ainsi les côtés du triangle équilatéral auquel il vient d'être fait allusion.

Trois points de fixation offrent une bonne stabilité de la liaison. Il est concevable d'en prévoir davantage peur former des polygones de liaison plus complexes avec des bielles plus nombreuses.

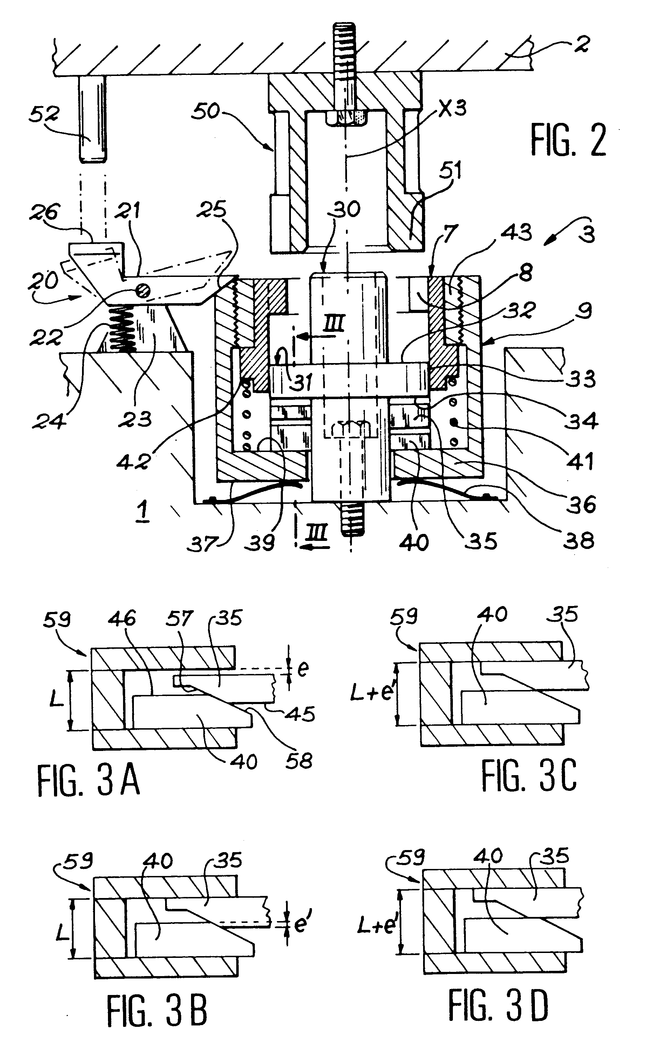

Les parties de baïonnettes rotatives 3 sont d'une façon générale semblables entre elles à l'exception d'une seule qui porte un levier de commande 5 et un dispositif de poignée à ergot 6 qui sera décrit plus loin. Elles sont composées de deux couronnes concentriques mobiles entre elles autour de y'axe X3. Une couronne interne 7 porte, comme on le voit également à la figure 2, des rainures ou des évidements 8 d'emboîtement, et une couronne externe 9 porte deux pattes 10 et 11, sur lesquelles deux bielles 4 sont articulées, ainsi qu'un dispositif à cliquet 12 destiné à unir dans certaines conditions les deux couronnes 7 et 9 entre elles. Pour cela, le cliquet 12 est monté rotatif sur une patte 13 à l'extérieur de la couronne externe 9 au moyen d'un pivot 14 et il comprend une partie d'encliquetage 15 qui s'étend au travers d'un évidement 16 de la couronne externe 9 jusqu'à la circonférence externe de la couronne interne 7. Un ressort 17 comprimé entre la partie opposée du cliquet 12 et la couronne externe 9 presse la partie d'encliquetage 15 contre la couronne interne 7.

La partie d'encliquetage 15 agit sur la couronne interne 7 par l'intermédiaire d'une surface composée d'une portion de glissement 18 présentant une légère inclinaison par rapport à la circonférence de la couronne interne 7 et d'une portion de butée 19 jointive à la portion de glissement 18 et d'extension sensiblement radiale, qui est orientée dans le sens opposé à la portion de glissement 18.

Un système de verrouillage 20 est situé près de chaque couronne extérieure 9. Il comprend, comme on le voit sur la figure 2, un levier basculant 21 qui tourne autour d'un pivot 22 fixé par une patte 23 au premier objet 1. Un ressort 24 est comprimé entre le levier basculant 21 et le premier objet 1 de manière à plaquer celui-là dans une entaille 25 de la couronne extérieure 9. L'engagement qui en résulte empêche la rotation de la couronne externe 9.

Les deux couronnes 7 et 9 tournent autour d'une tige fixe 30 vissée sur le premier objet 1 et qui matérialise l'axe X3. La tige fixe 30 porte une collerette extérieure 31 présentant une surface supérieure 32, une surface extérieure 33 autour de laquelle la couronne interne 7 est centrée et une surface inférieure 34 portant au moins un coin 35. La couronne externe 9 possède un fond 36 dont la surface inférieure 37 comprime un ressort en rondelle 38 contre le premier objet 1, dans le sens de l'axe X3, et dont la surface supérieure 39 porte au moins un second coin 40 qui vient frotter contre un des précédents 35. Un ressort hélicoïdal 41 est comprimé entre cette surface supérieure 39 et une surface inférieure 42 de la couronne interne 7, qui est donc repoussée vers le second objet 2 et maintenue en place grâce à un écrou de montage 43 vissé dans le sommet de la paroi interne de la couronne externe 9. L'écrou 43 assure le centrage de la couronne interne 7.

Le second objet 2 porte pour chaque point de fixation une partie de baïonnette fixe 50 munie de parties en relief 51 destinées à l'engagement dans les évidements 8 de la couronne interne 7. Par ailleurs, une butée 52 est disposée sur le second objet 2 en face d'un talon 26 de chacun des leviers basculants 21, sensiblement dans le prolongement du ressort 24.

On revient temporairement à la figure 1 pour remarquer que le premier objet 1 comprend encore une butée d'arrêt 53 sur laquelle le levier de commande 5 arrive quand la liaison des deux objets 1 et 2 est complète. En outre, un ressort hélicoïdal 54 est engagé autour d'une des bielles 4 et comprimé entre une bague 55 de celle-ci et une bague fixe 56 située sur le premier objet 1.

Les figures 3A à 3D résument le fonctionnement du système à coins. Chacun des coins 35 et 40 comprend une surface oblique, respectivement 57 et 58, et une surface horizontale (perpendiculaire à l'axe X3), respectivement 45 et 46.

La figure 3A représente la configuration initiale du système : les surfaces obliques 57 et 58 glissent l'une sur l'autre au cours du rapprochement des coins 35 et 40, ce qui provoque l'écartement de la collerette extérieure 31 et du fond 36 et réduit le jeu e qui s'étend dans la direction de l'axe X3 entre les coins 35 et 40 et un assemblage 59 composé en particulier des couronnes 7 et 9 et des parties en relief 51 et dont la hauteur au repos est L entre les faces d'appui des coins 35 et 40. La figure 3B illustre un état où le jeu a totalement disparu et où les surfaces horizontales 45 et 46 sont encore éloignées d'un espace e'. Le rapprochement des coins 35 et 40 a alors pour conséquence l'allongement de l'assemblage 59 jusqu'à l'état de la figure 3C, où elle s'est allongée de l'espace e' et où les surfaces horizontales 45 et 46 commencent de glisser l'une vers l'autre. Les rapprochements supplémentaires des coins 35 et 40 (figure 3D) n'ont plus d'influence sur l'assemblage 59, qui exerce donc un effort de serrage uniforme des coins 35 et 40.

Dans le cas présent, l'effort de serrage est transmis entre la surface inférieure 34 de la collerette externe 31 et la surface supérieure 39 du fond 36 à travers les parties en relief 51, la couronne interne 7, l'écrou 43 et la couronne externe 9. C'est cette dernière pièce, en particulier sa partie cylindrique assez mince, qui subit l'essentiel de l'allongement. L'espace e' est défini de telle sorte que les déformations restent élastiques.

La liaison entre les objets 1 et 2 s'effectue en plaçant les parties de baïonnettes fixes 50 devant les parties de baïonnettes mobiles 3 : les objets 1 et 2 sont soumis à un mouvement de rapprochement suivant l'axe X3 qui fait pénétrer les parties en relief 51 dans les évidements 8 jusqu'à ce que la surface supérieure 32 des collerettes externes 30 soit touchée par le fond des parties de baïonnettes fixes 50. Cependant, la butée 52 de chaque point de fixation atteint un peu auparavant le talon 26 et fait basculer le levier basculant 21. Le ressort hélicoïdal 54 se détend alors pour déplacer les bielles 4 et faire tourner les trois parties de baïonnettes mobiles 3 dans le sens inverse des aiguilles d'une montre sur la figure 1 sensiblement jusqu'à une position dans laquelle les couronnes internes 7 entrent en butée de rotation contre les parties de baïonnettes fixes 50. On remarquera, ce qui est un des avantages principaux de l'invention, que ce mouvement ne peut se produire que si toutes les butées viennent devant les talons 26. En d'autres termes, la liaison entre les deux objets 1 et 2 ne peut se produire que si tous les points de fixation sont effectivement utilisés.

L'opérateur saisit alors le levier de commande 5 et continue le mouvement de rotation. Les couronnes internes 7 butent alors contre les parties fixes de baïonnettes 50 et restent ainsi immobiles. Seules les couronnes externes 9 tournent, et les cliquets 12 sont progressivement dégagés des creux des couronnes internes 7 par le glissement des portions de glissement 18. Le serrage des coins 35 et 40 se produit pendant cette phase, et le mouvement est interrompu quand le levier de commande 5 repose sur la butée d'arrêt 53. L'action manuel le peut être remplacée par celle d'un outil multiplicateur d'effort tel qu'un ridoir placé entre un point fixe du premier objet 1 et le levier 5 et qui déplace ce dernier en se déformant.

Le système est réversible en ce sens qu'il est possible de procéder à un nombre indéterminé de liaisons et de déconnexions alternées des deux objets 1 et 2. Les déconnexions s'effectuent avec des opérations inverses : on fait tourner le levier de commande 5 dans le sens des aiguilles d'une montre pour mettre en mouvement les couronnes externes 9, puis également les couronnes internes 7 quand la face de butée 19 des cliquets 12 entre en contact avec le creux des couronnes internes 7. Le ressort hélicoïdal 54 est ensuite réarmé et, quand on retire le second objet 2, les leviers basculants 21 retombent dans les entailles 25 et bloquent à nouveau les parties de baïonnettes rotatives 3.

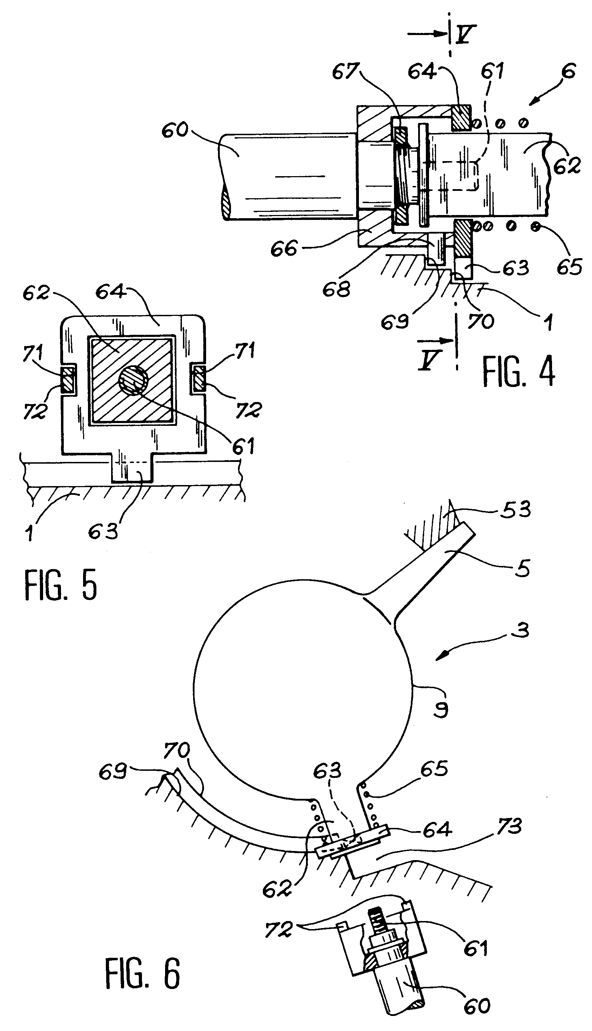

Le serrage des coins 35 et 40 permet de bloquer le dispositif en position de liaison des objets 1 et 2 et offre donc une certaine irréversibilité. Il est cependant possible d'adjoindre au dispositif un système qui accroisse la sécurité. Il s'agit en fait du dispositif à poignée et ergot 6. On se reporte aux figures 4, 5 et 6 pour sa description.

La poignée comprend une partie détachable 60 présentant une extrémité filetée 61 qui est vissée dans une partie fixe 62 reliée à la couronne externe 9 de la partie de baïonnette rotative 3 considérée. Un ergot de butée 63 est porté par une plaque percée 64 coulissant sur la partie fixe 62 et repoussée par un ressort hélicoïdal 65 comprimé entre cette plaque percée 64 et la couronne externe 9. La plaque percée 64 bute contre un boîtier 66 dont la partie détachable 60 passe à travers le fond. Une rondelle 67 permet de faire tourner la partie détachable 60 par rapport au boîtier 66 tout en solidarisant ces deux pièces en translation. Le boîtier 66 porte un ergot de blocage 68.

On voit sur la figure 5 que la rotation de la plaque percée 64 par rapport à la partie fixe 62 est impossible du fait que la section de celle-ci est carrée. De plus, la plaque percée 64 est munie de deux encoches 71 qui reçoivent des crans 72 du boîtier 66, si bien que celui-ci est maintenu fixe en rotation. Les ergots 68 et 63 sont donc maintenus respectivement dans des rampes externe 69 et interne 70 en forme d'arc de cercle et établis sur le premier objet 1.

La figure 6 montre que les rampes 69 et 70 sont interrompues à une position qu'atteignent les ergots 68 et 63 quand le levier de commande 5 repose contre la butée d'arrêt 53, et que le premier objet 1 présente là un recoin 73. Il est alors possible de dévisser la partie détachable 60 : la rampe externe 69 ne s'oppose plus au recul de l'ergot de blocage 68, et en conséquence le ressort hélicoïdal 65 repousse peu à peu la plaque percée 64 et l'ergot de butée 63 qui n'est plus non plus gêné par la rampe interne 70. La partie détachable 60 est finalement enlevée de la partie de baïonnette rotative 3, et l'ergot de butée 63 empêche la rotation accidentelle du dispositif de liaison dans le sens qui pourrait interrompre la liaison entre les objets 1 et 2.

La partie détachable 60 constitue un bon moyen pour vérifier aisément et sans ambiguïté que le dispositif de liaison a été engagé jusqu'à la position souhaitée.

## Revendications

1. Système comprenant un premier (1) et un second (2) objets réunis par plusieurs points de fixation par un dispositif de liaison, caractérisé en ce qu'il comprend à chaque point de fixation une partie de baïonnette rotative (3) ainsi qu'un système de verrouillage (20) en rotation de la partie de baïonnette rotative (3) sur le premier objet (1), et une partie de baïonnette fixe (50) ainsi qu'un système de libération (52), conçu de façon à interrompre l'effet du système de verrouillage (20), sur le second objet (2), et qu'il comprend en outre des bielles (4) reliant les parties de baïonnettes rotatives (3) et un système de serrage constitué de coins (35, 40) portés par le premier objet (1) et au moins une des parties de baïonnettes rotatives (3).

2. Système suivant la revendication 1, caractérisé par un moyen (54, 55, 56) disposé sur le premier objet (1) et agissant sur les bielles (4) et les parties de baïonnettes rotatives (3) pour tendre à les déplacer d'une position où le système de verrouillage (20) agit vers une position où les coins (35, 40) sont serrés.

3. Système suivant la revendication 1 ou 2, caractérisé en ce que les parties de baïonnettes rotatives (3) portant des coins (35) du système de serrage sont composées de deux couronnes (7, 9) mutuellement libres en rotation, une première des couronnes (7) étant conçue pour s'emboîter avec une partie de baïonnette fixe (50), les coins (35) étant portés par la seconde des couronnes (9), et en ce qu'un système d'encliquetage (12) libérable dans une direction de serrage des coins (35, 40) unit les deux couronnes.

4. Système suivant la revendication 3, caractérisé en ce que le système d'encliquetage comprend un cliquet (12) mobile sur une des couronne (9) et reposant sur l'autre couronne (7) par une surface d'appui comprenant une portion de butée (19) et une portion de glissement (18).

5. Système suivant l'une quelconque des revendications 1 à 4, caractérisé par des ressorts (38) disposés sur le premier objet (1) de manière à repousser les parties de baïonnettes rotatives (3) dans une direction où les coins (35, 40) sont rapprochés.

6. Système suivant l'une quelconque des revendications 1 à 5, caractérisé en ce qu'une des parties de baïonnettes rotatives (3) est munie d'une poignée à ergot (6), un ressort (65) est comprimé entre la poignée et ladite partie de baïonnette rotative, et le premier objet (1) est pourvu d'une rampe (70) sur laquelle l'ergot (63) est plaqué, la rampe présentant un creux (73) où l'ergot (63) peut pénétrer sous l'action du ressort (65) à la position de serrage des coins.

7. Système suivant l'une quelconque des revendications 1 à 6, caractérisé en ce que la poignée comprend une partie de préhension détachable (60) de l'argot (63) à la position de serrage des coins (35, 40).

8. Système suivant l'une quelconque des revendications 1 à 7, caractérisé en ce qu'une des parties de baïonnettes rotatives (3) porte un levier (5) de mise en rotation manuelle.

9. Système suivant l'une quelconque des revendications 1 à 8, caractérisé en ce que les points de fixation sont au nombre de trois.

10. Système suivant l'une quelconque des revendications 1 à 9, caractérisé en ce que toutes les parties de baïonnettes rotatives (3) portent des coins (35).

## Claims

1. System incorporating a first object (1) and a second object (2) joined via several fixing points by a linking device, characterized in that it comprises at each fixing point a rotary bayonet part (3), as well as a system (30) for locking in rotation the rotary bayonet part (3) on the first object (1) and a fixed bayonet part (50), together with a release system (52), designed so as to interrupt the effect of the locking system (20) on the second object (2), whilst it also comprises connecting rods (4) connecting the rotary bayonet parts (3) and a clamping system constituted by wedges (35,40) carried by the first object (1) and at least one of the rotary bayonet parts (3).

2. System according to claim 1, characterized by a means (54,55,56) placed on the first object (1) and acting on the connecting rods (4) and the rotary bayonet parts (3) in order to move them from a position where the locking system (20) acts to a position where the wedges (35,40) are clamped.

3. System according to claim 1 or 2, characterized in that the rotary bayonet parts (3) carrying the wedges (35) of the clamping system are formed by two rings (7,9), which are mutually free in rotation, a first of the rings (7) being designed so as to be nested with a fixed bayonet part (50), the wedges (35) being carried by the second of the rings (9), and in that a catching system (12) releasable in a clamping direction of the wedges (35,40) unites the two rings.

4. System according to claim 3, characterized in that the catching system comprises a mobile catch (12) on one of the rings (9) and resting on the other ring (7) by a bearing surface having an abutment portion (19) and a sliding portion (18).

5. System according to any one of the claims 1 to 4, characterized by springs (38) placed on the first object (1) so as to force back the rotary bayonet portions (3) in a direction where the wedges (35,40) are close together.

6. System according to any one of the claims 1 to 5, characterized in that one of the rotary bayonet parts (5) is provided with a lug handle (6), a spring (65) being compressed between the handle and said rotary bayonet part and the first object (1) is provided with a ramp (70) on which the lug (63) engages, the ramp having a recess (73) which can be penetrated by the lug (63) under the action of the spring (65) in the clamping position of the wedges.

7. System according to any one of the claims 1 to 6, characterized in that the handle comprises a detachable portion (60) for gripping the lug (63) in the clamping position of the wedges (35,40).

8. System according to any one of the claims 1 to 7, characterized in that one of the rotary bayonet parts (3) carries a mutual rotation lever (5).

9. System according to any one of the claims 1 to 8, characterized in that there are three fixing points.

10. System according to any one of the claims 1 to 9, characterized in that all the rotary bayonet parts (3) carry wedges (35).

## Patentansprüche

1. System umfassend einen ersten (1) und einen zweiten (2) Gegenstand, die durch mehrere Befestigungspunkte durch eine Verbindungsvorrichtung verbunden sind, **dadurch gekennzeichnet**, daß es an jedem Befestigungspunkt ein drehbares Bajonetteil (3) sowie ein System zur Drehverriegelungs (20) des drehbaren Bajonetteils (3) an dem ersten Gegenstand (1) und ein festes Bajonetteil (50) sowie ein Lösesystem (52) umfaßt, das so ausgebildet ist, die Wirkung des Verriegelungssystems (20) an dem zweiten Gegenstand (2) zu unterbrechen, und daß es ferner Zwischenglieder (4), die die drehbaren Bajonetteile (3) verbinden, und ein Festspannsystem umfaßt, das von Keilen (35, 40) gebildet ist, die von dem ersten Gegenstand (1) und wenigstens einem der drehbaren Bajonetteile (3) gehalten sind.

2. System gemäß Anspruch 1, **gekennzeichnet durch** eine Einrichtung (54, 55, 56), die an dem ersten Gegenstand (1) angeordnet ist und auf die Zwischenglieder (4) und die drehbaren Bajonetteile (3) wirkt, um zu versuchen, sie aus einer Position, in der das Verriegelungssystem (20) wirkt, in eine Position zu bewegen, in der die Keile (35, 40) festgespannt sind.

3. System gemäß Anspruch 1 oder 2, **dadurch gekennzeichnet**, daß die drehbaren Bajonetteile (3), die die Keile (35) des Festspannsystems tragen, von zwei gegenseitig drehbaren Ringen (7, 9) gebildet sind, wobei ein erster der Ringe (7) ausgebildet ist, daß es mit einem festen Bajonetteil (50) ineinanderpaßt, die Keile (35) von dem zweiten Ring (9) gehalten werden, und daß ein Einrastsystem (12), das in einer Festspannrichtung der Keile (35, 40) freigebbar ist, die zwei Ringe vereinigt.

4. System gemäß Anspruch 3, **dadurch gekennzeichnet**, daß das Einrastsystem eine Sperraste (12) umfaßt, die an einem der Ringe (9) beweglich ist und auf dem anderen Ring (7) durch eine Stützfläche ruht, die einen Anschlagabschnitt (19) und einen Gleitabschnitt (18) umfaßt.

5. System gemäß irgendeinem der Ansprüche 1 bis 4, **gekennzeichnet durch** Federn (38), die an dem ersten Gegenstand (1) derart angeordnet sind, daß sie die drehbaren Bajonetteile (3) in eine Richtung zurückdrücken, in der die Keile (35, 40) einander genähert sind.

6. System gemäß irgendeinem der Ansprüche 1 bis 5, **dadurch gekennzeichnet**, daß eines der drehbaren Bajonetteile (3) mit einem Griffzapfen (6) versehen ist, eine Feder (65) zwischen dem Griff und dem genannten drehbaren Bajonetteil zusammengedrückt ist, und der erste Gegenstand (1) mit einer Rampe (70) versehen ist, gegen die der Zapfen (63) drückt, wobei die Rampe eine Ausnehmung (73) aufweist, wo der zapfen (63) unter der Wirkung der Feder (65) in der Festspannposition der Keile eindringen kann.

7. System gemäß irgendeinem der Ansprüche 1 bis 6, **dadurch gekennzeichnet**, daß der Griff einen in der Festspannposition der Keile (35, 40) von dem zapfen lösbaren Greifabschnitt (60) umfaßt.

8. System gemäß irgendeinem der Ansprüche 1 bis 7, **dadurch gekennzeichnet**, daß einer der drehbaren Bajonetteile (3) einen Hebel (5) zur Drehung von Hand tragen.

9. System gemäß irgendeinem der Ansprüche 1 bis 8, **dadurch** **gekennzeichnet**, daß die Zahl der Befestigungspunkte drei ist.

10. System gemaß irgendeinem der Ansprüche 1 bis 9, **dadurch gekennzeichnet,** daß alle drehbaren Bajonetteile (3) Keile (35) tragen.
